# EUROPEAN PATENT APPLICATION

(11) **EP 0 564 044 A1**
(43) Date of publication of application: **06.10.1993**
(21) Application number: 93200910.3
(22) Date of filing: 30.03.1993
(51) Int. Cl.: B32B 21/10

(54) **Impact-resistant plywood and method for the manufacture thereof**

(30) Priority: 31.03.1992 NL 9200593
(71) Applicant: BRUYNZEEL MULTIPANEL B.V., NL-1506 PV Zaandam (NL)
(72) Inventor: van den Berg, Pieter Hubert, NL-1445 GC Purmerend (NL)
(74) Representative: Smulders, Theodorus A.H.J., Ir.

(57) **Abstract**

Described is a plywood that has an impact resistance considerably higher than that of conventional plywood and is hence very suitable for building yachts. The plywood comprises at least three wood sheets glued together, wherein the grains of the adjacent sheets run perpendicularly relative to each other and wherein a mat made of a fabric of polyethylene fibres is arranged at least between two adjacent wood sheets, preferably the fabric available under the brand name of Dyneema, such that when two sheets are glued together, only substantially the surfaces on both sides of the fabric contact the glue.

## Description

The invention relates to plywood comprising at least three wood sheets glued together, the grains of adjacent sheets running at an angle relative to each other.

Such a plywood is generally known and can be built up of at least two up to a maximum of ten and more layers. By gluing successive relatively thin wood sheets to form a composite structure, with the grains of the successive layers at an angle, generally perpendicular, relatively to each other, a sheet material is formed that is less expensive than solid wood of the same quality and that has better properties than solid wood as far as warping and impact resistance are concerned. Therefore, plywood is used on a large scale in (house) building, bodywork building, container building, and boat and yacht building. Particularly in yacht building, but also in other applications, the known plywood has the drawback that its impact resistance is still too poor. In yachts, this has the drawback that the yacht easily becomes leaky upon colliding with a sharp underwater object. This is one of the reasons why today many skippers prefer yachts made of polyester, which has a greater impact resistance. However, the demand for wooden yachts would strongly increase if the hulls thereof had a greater impact resistance. Also in container and bodywork building, as well as in other branches of boat building, such an impact resistant plywood would be most desirable.

Therefore, the object of the present invention is to provide a plywood having an impact resistance that is much greater than that of the known, conventional plywood.

To that end, the invention provides plywood of the abovementioned type, characterized in that a mat made of a fabric of polyethylene fibres is arranged at least between two adjacent wood sheets, such that when the two sheets are glued together, only substantially the surfaces on both sides of the fabric contact the glue.

Preferably, the polyester fabric used is a fabric that is commercially available under the brand name of Dyneema. This fabric is made from a special polyethylene fibre whose molecules have been "directed", so that the fibre is given a very great tensile strength. The fabric is supplied in the form of a mat.

The invention also relates to a method for manufacturing impact-resistant plywood according to the principle of the invention, characterized in that the glue, prior to gluing the wood sheets to the fabric, is applied to the faces of the wood sheets adjacent to the fabric and subsequently the assembly of wood sheets and fabric is compressed.

The invention further relates to a semi-finished product for use in the plywood according to the invention, characterized by two adjacent wood sheets between which a mat made of a fabric of polyethylene fibres is arranged, such that when the two sheets are glued together, only substantially the surfaces on both sides of the fabric contact the glue.

The invention still further relates to a semi-finished product for use in the plywood according to the invention, characterized by three wood sheets, with the arrangement of a mat made of a fabric of polyethylene fibres between the first and the second sheet and between the second and the third sheet, such that when two sheets are glued together, only substantially the surfaces on both sides of the fabric contact the glue.

It is observed that it is conventional to use the Dyneena fabric in building polyester yachts. However, this involves the incorporation of the fabric in a sandwich structure of polyester, with the fabric becoming completely impregnated with the polyester blend and forming a brittle structure.

From EP-A-0.453.025 it is also known to reinforce plywood with a Dyneema fabric. However, this likewise involves a complete impregnation of the fabric with glue when the various wood sheets and the fabric disposed thereinbetween are glued together.

It has been found that polyester thus reinforced with Dyneema fabric, as well as plywood reinforced therewith, indeed show a greater impact resistance than when the fabric has not been arranged, but in the case of plywood, the increase in impact resistance is absolutely insufficient.

Finally, GB-A-1.006.399 describes a wood panel in which, to avoid cracking of the extremely thin outer decorative veneer layer that is arranged on the panel, a fabric is arranged between this layer and the panel by means of layers of glue. Therefore, this patent relates to the avoidance of cracks in a thin veneer layer as a consequence of stresses developing within the plywood, while the present invention aims at a plywood having a great impact resistance against forces exerted externally. Moreover, the forces to which the plywood according to the invention must be resistant are of an entirely different order of magnitude than the forces occurring in the wooden panel according to the British patent.

The invention is based on the surprising view that the impact resistance of plywood can be increased considerably when the structure of the Dyneema fabric is influenced as little as possible during the production of the plywood, and this is realized by using a type of glue and a manner of gluing that ensure that when two wood sheets with the fabric thereinbetween are glued together, this fabric contacts the glue only at the surface and adheres to the adjacent wood sheets, but remains for the rest free of glue.

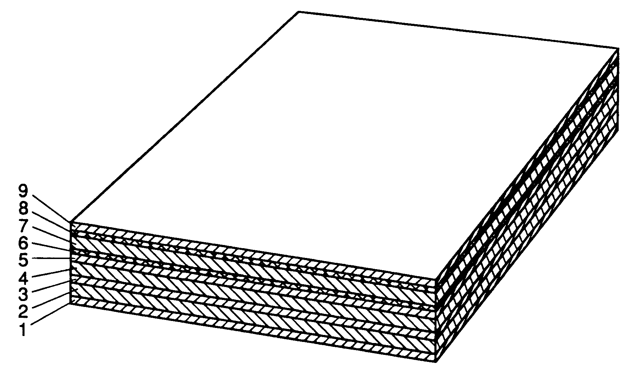

The invention will be illustrated hereinafter on the basis of an exemplary embodiment with reference to the accompanying drawing, whose single figure shows a perspective view of a portion of a plywood sheet according to the invention.

The plywood shown in the figure comprises, by way of example, seven thin wood sheets, designated by the reference numerals 1-5, 7 and 9. These sheets can all be made of the same kind of wood, but it is also possible to choose a more expensive (nicer) kind of wood for the outer sheets 1 and 9, and a less expensive kind of wood for the other sheets that will not be visible. As is conventional for plywood, the grains of the successive wood sheets are arranged perpendicularly relative to each other. According to the invention, arranged between sheets 5 and 7 is a fabric made of a reinforced polyethylene fibre, preferably Dyneema or a similar fabric, while a similar fabric is arranged between sheets 7 and 9.

For practical tests, a number of compositions of wood sheets of different thicknesses, having one or two layers of Dyneema, were composed and tested.

The fabric used was Dyneema SK 60 (weight = 160 g/m²).

For gluing the fabric, a combination of a polyvinylacetate glue was used, as is for instance commercially availabe under the brand name of Vylok 1026, with an isocyanate hardening agent. The percentage of hardening agent used was approximately 6% and the amount of glue was approximately 150 g/m². When the layer of fabric was arranged between two wood sheets, glue was applied to the sides of the wood sheets facing the fabric, and subsequently, the fabric was glued to both sheets while a squeeze pressure of 10 kg/m² was exerted. For gluing the wood sheets that are in direct abutment, i.e. without an intermediate layer of fabric, use was made of the normal, familiar gluing and production technique for the manufacture of plywood. The Table below indicates 11 different possibilities of building up the plywood according to the invention. In this Table, the thickness of the various sheets is given in mm, while (D) stands for a transverse grain direction and (L) for a longitudinal grain. A layer of Dyneema fabric is indicated by "*". The wood used for all layers was gaboon. The last column of the Table gives the impact resistance measured, wherein for structure 11, corresponding to the structure shown in the figure, the impact resistance in a direction both parallel to the grain (//) and perpendicular to the grain (l) is given. The impact resistance was tested each time by exerting the impact from the direction where before the fabric most wood sheets are located; hence, in the example from the figure by carrying out the impact test on sheet 1.

**TABLE**

| | Structure | Impact resistance (Nm) |
|---|---|---|
| 1 | 1,5(L)-2,5(D)+*+1,5(L) | 5,9 |
| 2 | 1,0(L)-2,5(D)+*+1,0(L) | 5,4 |
| 3 | 1,5(D)-1,5(L)-1,5(D)+* | 5,6 |
| 4 | 1,5(D)-1,5(L)-1,5(D) | 0,9 |
| 5 | 1,5(L)-1,5(D)-1,5(L)-1,5(D)+*+1,5(L) | 19,8 |
| 6 | 1,5(L)-1,5(D)-1,5(L)-1,5(D)-1,5(L) | 1,6 |
| 7 | 1,5(L)-1,5(D)-2,5(L)+*+1,5(L) | 12,6 |
| 8 | 1,5(L)-1,5(D)-1,5(L)-1,5(D)+*+1,5(L) | 15,8 |
| 9 | 1,5(L)-1,5(D)-1,5(L)-1,5(D)-1,5(L) | 1,9 |
| 10 | 1,5(L)-1,5(D)-1,5(L)-1,5(D)+*+1,5(L) | 15,5 |
| 11 | 1,5(L)-2,5(D)-1,5(L)-2,5(D)-1,5(L)+*+2,5(D)+*+1,5(L) | 40,0 //; |
| | | 56,7 l |

For all structures tested that are mentioned in the Table, the force of impact measured is many times greater than when the same structure was tested without the layer or layers of fabric or with a glue-impregnated layer of fabric. Moreover, it was surprising that in structure 11 the differences in impact resistance for the two different directions (// and l) were relatively small. When no fabric is present, the impact resistance in the direction parallel to the grain is considerably smaller than the one perpendicular to the grain.

By way of illustration, the value of the E-module and the bending strength for structure 11 is also given below.

| | | |
|---|---|---|
| E-module | // | 7,000 N/nm² |
| | l | 5,000 N/nm² |
| Bending strength | // | 85 N/nm² |
| | l | 80 N/nm² |

These are most favourable values as well, particularly when the plywood is used in yacht building.

When instead of 150 g/m2 of glue, 200 g/m2 of glue is applied to the plywood of structure 3 in the Table, the impact resistance reduces from 5.6 Nm to 4.6 Nm, *ceteris paribus*, which shows that a high impact resistance is only obtained by using a smallest possible amount of glue, precisely sufficient to obtain a proper adhesion of the fabric to the adjacent layers of wood.

## Claims

1. Plywood comprising at least three wood sheets glued together, the grains of adjacent sheets running at an angle relative to each other, characterized in that a mat made of a fabric of polyethylene fibres is arranged at least between two adjacent wood sheets, such that when the two sheets are glued together, only substantially the surfaces on both sides of the fabric contact the glue.

2. Plywood according to claim 1, characterized in that the fabric is available under the brand name of Dyneema.

3. Plywood according to claim 1 or 2, characterized in that the fabric is glued with a polyvinylacetate glue with an isocyanate hardening agent.

4. A method for manufacturing plywood according to any one of claims 1-3, characterized in that the glue, prior to gluing the wood sheets to the fabric, is applied to the faces of the wood sheets adjacent to the fabric and subsequently the assembly of wood sheets and fabric is compressed.

5. A semi-finished product for use in the plywood according to any one of claims 1-3, characterized by two adjacent wood sheets between which a mat made of a fabric of polyethylene fibres is arranged, such that when the two sheets are glued together, only substantially the surfaces on both sides of the fabric contact the glue.

6. A semi-finished product for use in the plywood according to at least one of claims 1-3, characterized by three wood sheets, with the arrangement of a mat made of a fabric of polyethylene fibres between the first and the second sheet and between the second and the third sheet, such that when two sheets are glued together, only substantially the surfaces on both sides of the fabric contact the glue.

7. A semi-finished product according to claim 4 or 5, characterized in that the fabric is available under the tradename of Dyneema.

8. A semi-finished product according to claim 4 or 5, characterized in that the fabric is glued with a polyvinylacetate glue with an isocyanate hardening agent, the glue, prior to gluing the wood sheets to the fabric, being applied to the faces of the wood sheets adjacent to the fabric.
